# EUROPEAN PATENT APPLICATION

(11) **EP 2 282 104 A2**
(43) Date of publication of application: **09.02.2011**
(21) Application number: 09173191.9
(22) Date of filing: 15.10.2009
(51) Int. Cl.: F16M 11/40, F16M 11/32

(54) **Winding tripod**

(30) Priority: 05.08.2009 CN 200910162450
(71) Applicant: Ningbo Weifeng Image Equipment Group Co. Ltd., Luotuo Industry Zone Ningbo Zhejiang 315 202 (CN)
(72) Inventor: Lu, Weiming, 315202 Ningbo Zhejiang (CN)
(74) Representative: Bongiovanni, Simone

(57) **Abstract**

The present invention discloses a winding tripod, which includes a cradle head (200) and three legs (100). Each of the legs (100) is connected at one end with the cradle head (200) via a universal joint, and used at the other end for supporting. At least one of the legs (100) therein includes multiple first movable joints (7) and multiple second movable joints (9), which are connected together alternately and hinged via a locking coupling device. The first and the second movable joints are provided with a hoverball hole. Between the first and the second movable joints are positioned a spring (5) and a hoverball (6). The hoverball (6) is clipped into the hoverball hole when the first and the second movable joints are pivotally turned to a predetermined angle.

## Description

### FIELD OF THE INVENTION

The present invention relates to a photography device, and particularly to a winding tripod.

### BACKGROUND OF THE INVENTION

A tripod is generally used for supporting a camera or vidicon when the camera or vidicon is used to take photos. Moreover, the tripod can be adjusted to meet the requirements on the shooting angle.

In order to facilitate adjustment of the shooting angle, a winding tripod currently appears, that is, the legs of the tripod can be flexibly wound around other objects. However, links of the legs of most of the prior art winding tripods are connected together via a plurality of ball-cradle head universal joints therebetween, and the wound legs of the tripod are very easy to be unwound and stretched due to small friction force of the ball-cradle head universal joints, which may result in falling and damaging of the camera or vidicon mounted on the tripod.

Therefore, it is necessary to design a new tripod to overcome the above defects.

### CONTENTS OF THE INVENTION

As to the defects of the prior art technology, a purpose of the present invention is to provide a winding tripod that can be wound firmly and wound/unwound flexibly.

The winding tripod of the present invention includes a cradle head and three legs, wherein each of the legs is connected at one end thereof with the cradle head via a universal joint and supported at the other end on the ground. At least one of the legs therein includes a plurality of first movable joints and a plurality of second movable joints, wherein said first and second movable joints are connected together alternately and hinged via a locking coupling device, so that the first movable joint and the second movable joint are capable of pivot with respect to each other..

It is preferred that the first and the second movable joints each are provided with a hoverball hole. Between the first and the second movable joints are positioned a spring and a hoverball. The spring pushes the hoverball and thus the hoverball is clipped into the hoverball hole when the first movable joint is pivoted to one of a plurality of predetermined angles with respect to the second movable joints.

It is preferred that when the first movable joint is pivoted towards another one of the plurality of predetermined angles with respect to the second movable joint, during the pivoting movement, the spring is retracted, so that the hoverball is disengaged with the hoverball hole, and when the first movable joint is pivoted and reach the another one of the plurality of predetermined angles with respect to the second movable joint, the spring pushes the hoverball once more, so that the hoverball is clipped into the hoverball hole again.

It is preferred that the locking coupling device includes a male butt rivet and a female butt rivet used as a hinge axis, which are riveted together and make an interference fit with a hinge hole on the first and the second movable joints. It is more preferred that the magnitude of interference of the interference fit is 0.1-0.3 mm.

It is preferred that the tripod further includes a rubber ring, with which the outer circumference of the second movable joint is muff-coupled.

It is preferred that the hoverball is clipped into the hoverball hole when a pivotal angle between the first movable joint and the second movable joint is 180 degrees.

It is preferred that the first movable joint and the second movable joint each are provided with a chute, on which is positioned the hoverball hole.

It is preferred that the first movable joint includes two first connection sections, each of which is provided with a through hole.

It is preferred that the second movable joint includes two second connection sections, each of which is provided with double ears fitted with the first connection sections, and the double ears are provided with a through hole.

It is preferred that the tripod further includes a mat and a footmuff supported on the ground, the mat is muff-coupled with the footmuff, and the footmuff is hinged to the second movable joint via the locking coupling device.

The winding tripod of the present invention can overcome the defects of the prior art technology. A universal joint structure without a security function is replaced with a three-dimensional structure with the security function, which thus enables the windable legs to be wound firmly around any surface and winding and unwinding of the legs to be more flexible.

### BRIEF DESCRIPTION OF THE DRAWINGS

Figure 1a and Figure 1b are exploded structural schematic views of the winding tripod in a preferred embodiment of the present invention.
Figure 2 is a cross-sectional view of one of the legs of the winding tripod in the preferred embodiment of the present invention.
Figure 3a is a schematic view of the first movable joint in the preferred embodiment of the present invention.
Figure 3b is a schematic view of the second movable joint in the preferred embodiment of the present invention.
Figure 4 is a top view of the winding tripod in the preferred embodiment of the present invention.

### DETAILED DESCRIPTION OF THE EMBODIMENTS

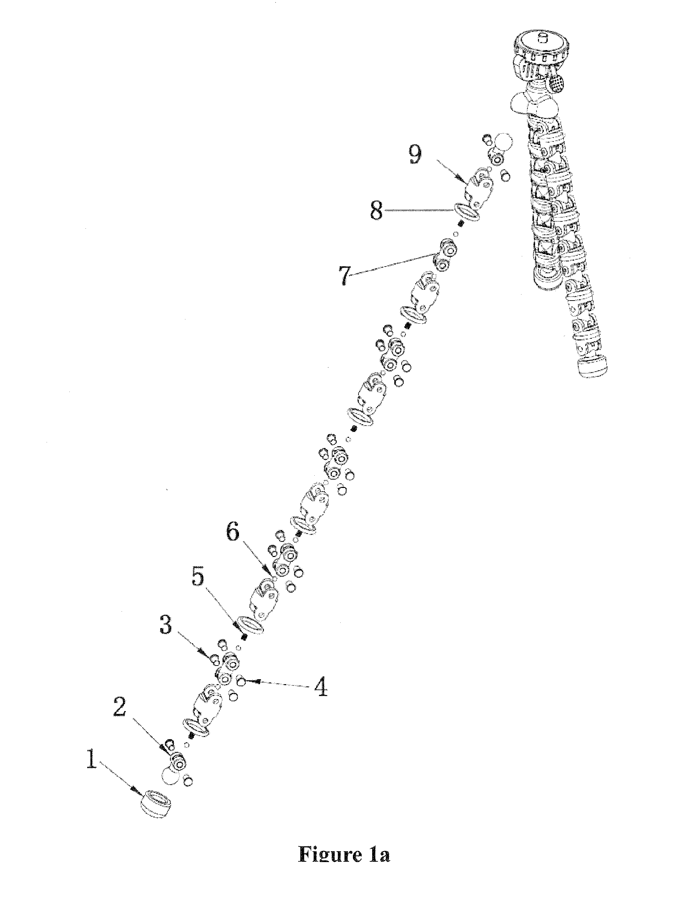

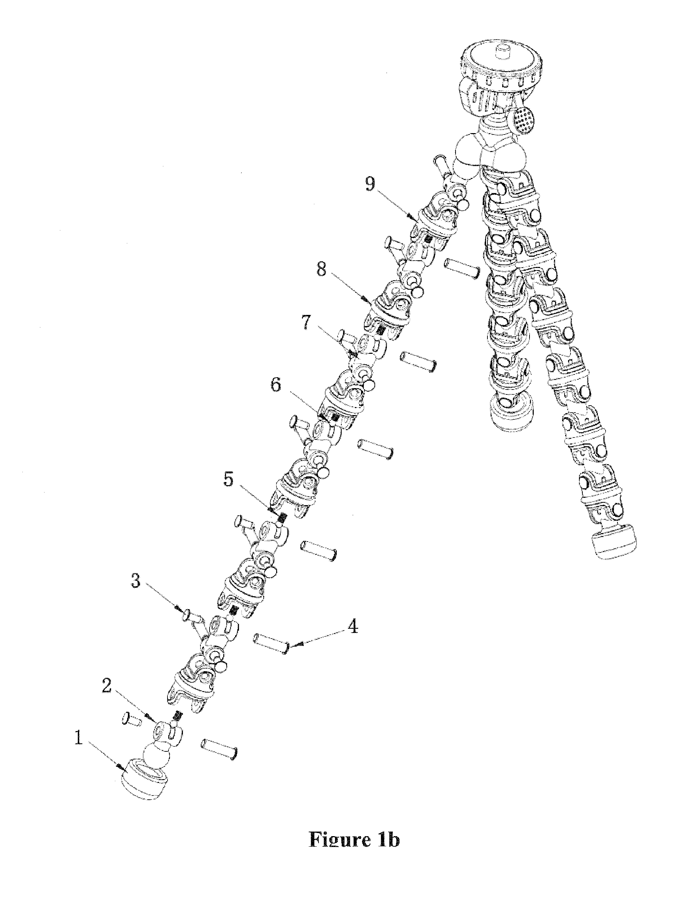

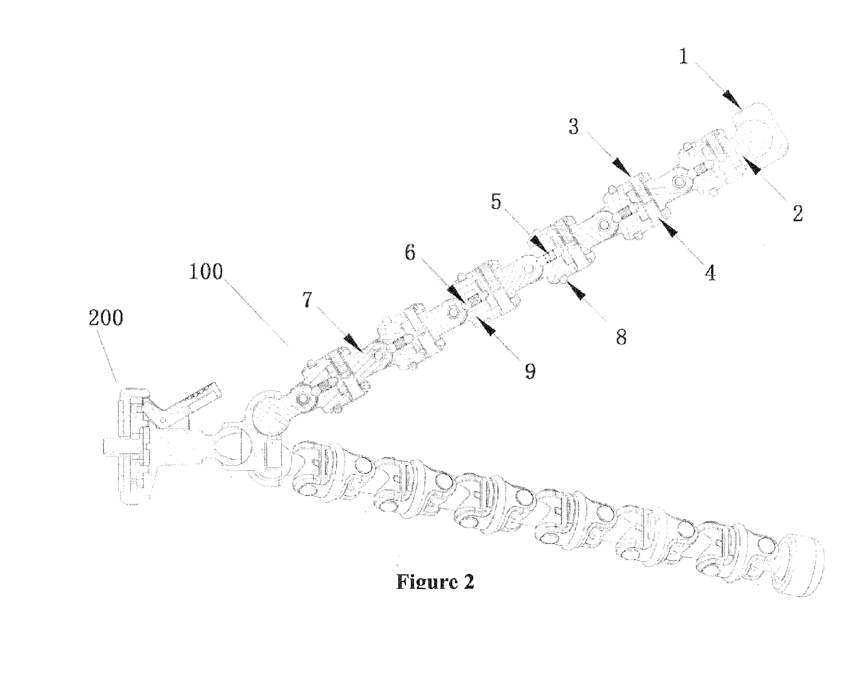

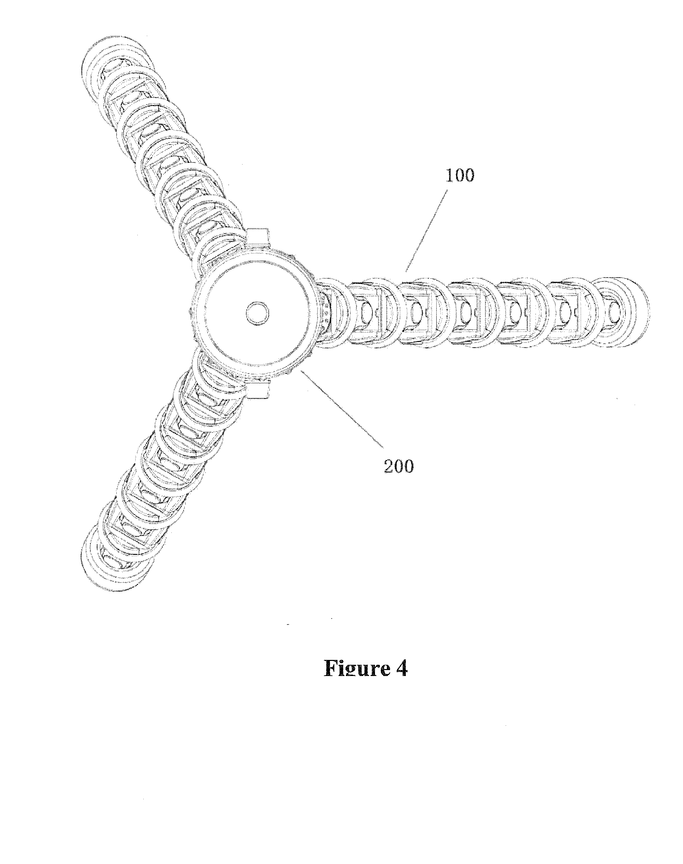

As shown in Figures 1a, 1b, 2 and 4, the winding tripod of the present invention includes three legs 100s and a cradle head 200, each of the legs 100 connected at one end with the cradle head 200 via a universal joint and spherically rotatable around the cradle head 200. At least one of the legs 100 includes a plurality of first movable joints 7 and a plurality of second movable joints 9. As shown, the first movable joints 7 and the second movable joints 9 are connected together alternately and hinged via a locking coupling device; that is, one of the first movable joints 7 is hinged to one of the second movable joints 9, this second movable joint 9 is in turn hinged to another one of the first movable joints 7, and so on. The connection length can be determined based on actual application.

Each of the legs 100 is composed of a plurality of movable joints hinged together. The first movable joints 7 and the second movable joints 9 can make a pitching movement through pivoting around a hinge axis. When the tripod is in use, each of the movable joints can be pivoted, making the tripod unbent or bent into a particular shape. For convenience of use, when the tripod is not in use, it can be wound up.

In a preferred embodiment of the present invention, a butt rivet is used between the first movable joint 7 and the second movable joint 9. The butt rivet, including a male butt rivet 3 and a female butt rivet 4, is interference-fitted with holes on the first movable joint 7 and the second movable joint 9, so as to produce an enough winding force. In an embodiment, when the magnitude of interference is 0.1-0.3 mm, the friction force between each pair of first movable joint 7 and second movable joints 9 can reach about 10-50 N, and the amount of the friction force, i.e. 10-50N, is large enough to fix the first movable joint 7 and the second movable joint 9 to each other, but not enough to form a deadlock between the the first movable joint 7 and the second movable joint 9. To connect the first movable joint 7 and the second movable joint 9 together, firstly the female butt rivet 4 is mounted into a hinge hole, and then the male butt rivet 3 is mounted into the hinge hole and engaged with the female butt rivet 4.

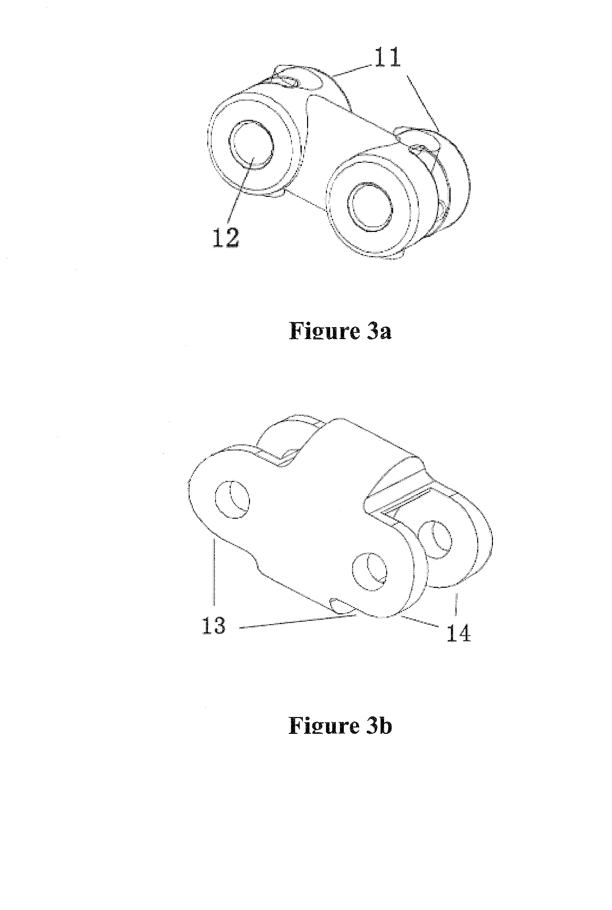

In the preferred embodiment of the present invention, referring to Figures 3a and 3b, the first movable joint 7 includes two first connection sections 11, which are hinged to the two adjacent second movable joints 9, respectively, each of the first connection sections 11s having a through hole 12.

The second movable joint 9 also has two second connection sections 13, each of which has "double ears" 14 matched with the first connection section on the first movable joint 7. Each of the ears 14 has a hole, the diameter of which is substantially consistent with diameter of the through hole on the connection section of the first movable joint 7.

Though the connection section 13 shown in Figure 3b is provided with two ears, it can be understood that, in order to more firmly connect the first movable joint 7 with the second movable 9, the ears can be designed so that the number of the ears is more than 2, and thus the connection section 11 is designed in the corresponding shape.

One skilled in the art should understand that the first movable joint 7 and the second movable joint 9 may have other shape and structure, so long as both of them ar connected together via a hinge having locking connection, without going beyond the protection scope of the present invention.

The first movable joint 7 and the second movable joint 9 each are provided with a hoverball hole. Between the first and the second movable joints are positioned a spring 5 and a hoverball 6. Under the action of the elastic force of the spring 5, the hoverball 6 is pushed and clipped into the hoverball hole when the first movable joint is pivoted a predetermined angle with respect to the second movable joint. In the preferred embodiment of the present invention, for example, the spring 5 is ejected outwardly from both ends thereof and pushes the hoverball 6, and thus the hoverball 6 is clipped into the hoverball hole when the leg 100 is unbent; that is, the hoverball 6 is clipped into the hoverball hole when the pivotal angle between the first movable joint 7 and the second movable joint 9 is 180 degrees. The pivotal angle mentioned herein between the first movable joint 7 and the second movable joint 9 means the included angle between major axes of the first movable joint 7 and the second movable joint 9.

It should be noted that, said predetermined pivotal angle is not limited in 180 degree. That is to say, the first movable joint 7 and the second movable joint 9 can be fixed at a plurality of predetermined pivotal angles.

As above-mentioned, when the magnitude of interference is 0.1-0.3 mm, the friction force between each pair of first movable joint 7 and second movable joints 9 can reach about 10-50 N. Therefore, an operator can pivot the first movable joint 7 and the second movable joint 9 without a great effort.

When the legs are unbent, if it is desirable to wind the legs, an operator may pivot the first movable joint 7 and the second movable joint 9. During pivoting of the movable joints, the spring 7 pulls the hoverball 6 backwards, so that the hoverball 6 is disengaged with the hoverball hole. When the first movable joint 7 and the second movable 9 pivot to another pivotal angle and stop there, the spring 5 pushes the hoverball 6 outwards once again, so that the hoverball 6 is clipped into the hoverball hole and thus the legs are stable at said another pivotal angle. Therefore, it is achieved that the legs can be wound/unwound more flexibly.

A sound is usually made when the spring 5 pushes the hoverball 6 to be clipped into the hoverball hole, thus reminding an operator that the corresponding movable joints have already been pivoted in place.

It is preferred that the hoverball hole is positioned on the connection sections of the first movable joint 7 and the second movable joint 9. As shown, the first connection section 11 and the second connection section 13 movably connected as mentioned above are provided with an orbital chute, and the hoverball hole can be positioned at the middle point of the chute and has a shape of a hemisphere recess matching with the hoverball 6.

It is preferred that a rubber ring 8 can be positioned on the second movable joint 9, so as to further increase the friction force during the winding of the legs 100 and thus make the legs 100 wound more firmly. For example, the outer circumferential surface of the second movable joint 9 is provided with a shallow groove, with which the rubber ring 8 is muff-coupled.

The tripod can further include a mat 1 and a footmuff 2, wherein the footmuff 2 is connected to the end of the leg 100, and the mat 1 is muff-coupled with the footmuff 2 to protect the footmuff 2 and support the tripod on the ground. The footmuff is hinged to the second movable joint via the locking coupling device.

In the present invention, at least one of the legs 100 is provided with locking hinge connection. It is preferred that all of the three legs are provided with the locking hinge connections.

The first movable joint 7 and the second movable joint 9 can be made of such metal materials as stainless steel and aluminum alloy or the like, or appropriate nonmetal or composite materials.

Though the present invention is described with reference to the above-mentioned preferred embodiments, its implementation is not limited to the above-mentioned embodiments. It should be understood that one skilled in the art might make various changes and modifications without departing from the subject of the present invention.

## Claims

1. A winding tripod, which comprises a cradle head (200) and three legs (100), wherein each of the legs (100) is connected at one end thereof with the cradle head (200) via a universal joint and supported at the other end on the ground, **characterized in that**:
at least one of the legs (100) includes a plurality of first movable joints (7) and a plurality of second movable joints (9), wherein said first movable joints (7) and second movable (9) are connected together alternately and hinged via a locking coupling device, so that the first movable joint (7) and the second movable joint (9) are capable of pivot with respect to each other.

2. The winding tripod according to claim 1, wherein the first movable joint (7) and the second movable joint (9) each are provided with a hoverball hole; between the first movable joint (7) and the second movable joint (9) are positioned a spring (5) and a hoverball (6); and the spring (5) pushes the hoverball (6) and thus the hoverball (6) is clipped into the hoverball hole when the first movable joint (7) is pivoted to one of a plurality of predetermined angles with respect to the second movable joint (9).

3. The winding tripod according to claim 2, wherein when the first movable joint (7) is pivoted towards another one of the plurality of predetermined angles with respect to the second movable joint (9), during the pivoting movement, the spring (5) is retracted, so that the hoverball (6) is disengaged with the hoverball hole, and when the first movable joint (7) is pivoted and reach the another one of the plurality of predetermined angles with respect to the second movable joint (9), the spring (5) pushes the hoverball (6) once more, so that the hoverball (6) is clipped into the hoverball hole again.

4. The winding tripod according to any one of claims 1-3, wherein the locking coupling device includes a male butt rivet (3) and a female butt rivet (4) used as a hinge axis, which are riveted together and make an interference fit with a hinge hole on the first movable joint (7) and the second movable joint (9).

5. The winding tripod according to claim 4, wherein the magnitude of interference of the interference fit is 0.1-0.3 mm.

6. The winding tripod according to any one of claims 1 to 3 and 5, wherein the tripod further includes a rubber ring (8), with which the outer circumference of the second movable joint (9) is muff-coupled.

7. The winding tripod according to claim 2 or 3, wherein the plurality of predetermined pivotal degrees include 180 degrees.

8. The winding tripod according to claim 2 or 3, wherein the first movable joint (7) and the second movable joint (9) each are provided with a chute, on which is positioned the hovelball hole .

9. The winding tripod according to any one of claims 1 to 3, wherein the first movable joint (7) includes two first connection sections (11), each of which is provided with a through hole.

10. The winding tripod according to claim 9, wherein the second movable joint (9) includes two second connection sections (13), each of which is provided with double ears (14) fitted with the first connection sections (11), and the double ears (14) are provided with a through hole.

11. The winding tripod according to any one of claims 1 to 3, wherein the tripod further includes a mat (1) and a footmuff (2) supported on the ground, the mat (1) is muff-coupled with the footmuff (2), and the footmuff (2) is hinged to the second movable joint (9) via the locking coupling device.
